# FASCICULE DE BREVET EUROPEEN

(11) **EP 0 999 917 B1**
(45) Date de publication et mention de la délivrance du brevet: **28.03.2007**
(21) Numéro de dépôt: 99920921.6
(22) Date de dépôt: 26.05.1999
(51) Int. Cl.: B24B 5/42, B24B 27/00, B23B 5/18, B23C 3/06

(54) **MACHINE-OUTIL SIMPLIFIEE D'USINAGE DE PIECES DE REVOLUTION, NOTAMMENT DE VILEBREQUINS ET PROCEDES DE TRAVAIL D'UNE TELLE MACHINE-OUTIL**
VEREINFACHTE ROTATIONSSYMMETRISCHE WERKSTÜCKE BEARBEITUNGSMASCHINE, INSBESONDERE KURBELWELLEN UND ARBEITSVERFAHREN SOLCH EINER MASCHINE
SIMPLIFIED MACHINE TOOL FOR MACHINING ROTATING PARTS, IN PARTICULAR CRANKSHAFTS AND WORKING METHODS OF SUCH MACHINE TOOLS

(30) Priorité: 26.05.1998 FR 9806600
(43) Date de publication de la demande: 17.05.2000
(73) Titulaire: RENAULT AUTOMATION COMAU, 92365 Meudon la Forêt, Cedex (FR)
(72) Inventeur: ASSIE, Jean-Paul, F-81100 Castres (FR)
(74) Mandataire: Thurgood, Alexander John
(86) Numéro de dépôt international: PCT/FR1999/001229
(87) Numéro de publication internationale: WO 1999/061203

(56) Documents cités:
- FR-A- 2 727 885
- US-A- 2 128 186
- US-A- 3 623 274
- US-A- 4 003 721
- US-A- 4 305 232
- US-A- 4 718 196

## Description

La présente invention concerne une machine-outil comme définie par le préambule de la revendication 1. Un exemple d'une telle machine-outil est divulgué par FR 2 727 885 A.

L'art antérieur le plus proche est décrit dans la demande de brevet français FR 2 727 885 A déposé au nom de la demanderesse. Ce brevet décrit et représente une machine-outil pour l'usinage de vilebrequins, le procédé de travail et la chaîne d'usinage d'une telle machine-outil ayant pour objet de diminuer les temps morts dus aux opérations dites auxiliaires telles celles de débridage, bridage, chargement, déchargement et indexage de la pièce sur la machine-outil. La machine-outil, affectée notamment à l'usinage par tournage-arasage de vilebrequins pour des moteurs à quatre cylindres en ligne, comprend, agencés sur un bâti le long de l'axe de transfert d'une chaîne d'usinage desdits vilebrequins et dans un même plan horizontal :
- un poste d'usinage équipé d'au moins un disque porte-outils assurant les opérations de tournage-arasage des vilebrequins,
- et deux stations de travail qui, assurant l'entraînement en rotation de deux vilebrequins, sont disposés parallèlement en amont et en aval du poste d'usinage, de telle sorte que le disque porte-outils de ce dernier monté mobile le long de l'axe de transfert puisse évoluer selon un mouvement de va-et-vient d'une station de travail à l'autre et assurer l'usinage d'un vilebrequin pendant les opérations auxiliaires nécessaires à l'installation d'un nouveau vilebrequin sur l'autre station de travail, et vice-versa. La disposition coplanaire des deux stations de travail de part et d'autre d'un poste d'usinage, conjuguée avec la mobilité de ce dernier entre les deux stations de travail, autorise ainsi pendant les temps nécessaires aux opérations auxiliaires d'un vilebrequin sur une station de travail, les opérations d'usinage d'un vilebrequin sur l'autre station de travail par le disque porte-outils du même poste d'usinage. De ce fait, le rapport quantitatif est multiplié par deux et l'encombrement occupé par l'ensemble de la machine-outil est moindre que celui occupé par deux machines-outils, avantage non négligeable compte tenu du coût du mètre carré occupé en zone industrielle. Bien que répondant aux besoins des utilisateurs d'une chaîne de fabrication de vilebrequins complètement automatisée, la demanderesse a constaté que ce type de machine-outil pouvait avoir une contrainte pour certaines applications en ne proposant pas une grande accessibilité aux différents postes de travail, notamment lors d'une installation manuelle des pièces à usiner. En effet, la disposition d'un poste d'usinage entre deux stations de travail réduit les possibilités d'accès, ce qui oblige les concepteurs à prévoir un portique muni de bras de préhension assurant le passage des pièces ou vilebrequins à usiner d'une première station de travail à une autre, ou pour changer le ou les outils du poste d'usinage. En outre, une autre contrainte de la machine-outil telle que précédemment conçue réside dans le fait que la préhension du vilebrequin formant la pièce de révolution à usiner est réalisée par deux mandrins qui, situés à chaque extrémité du vilebrequin, referment leurs mors sur ces dernières afin d'entraîner et guider en rotation le vilebrequin lors de l'opération d'usinage. Cette disposition empêche l'usinage des extrémités de vilebrequins sur ces stations de travail. Aussi, l'usinage complet d'un pièce de révolution n'est pas possible à partir d'une telle installation.

Il existe également dans l'art antérieur des machines-outils telle celle décrite dans le brevet américain n° US 4 718 196 du type de celle comprenant agencés sur un bâti dans un même plan horizontal :
- deux postes d'usinage équipés d'au moins un outil assurant l'usinage des pièces de révolution, et
- deux stations de travail qui, composées chacune d'un mandrin porte-pièce assurant la rotation de deux pièces de révolution, sont disposées parallèlement l'une par rapport à l'autre et sont placées chacune devant un poste d'usinage de telle sorte que deux pièces puissent être usinées simultanément. Ce type de machine outil a également pour inconvénient un manque d'accessibilité en ce que les postes d'usinage sont placés devant chaque station de travail. De plus, elle ne permet pas la réalisation d'opérations auxiliaires sur une station de travail pendant l'usinage sur l'autre station de travail du fait d'une mise en mouvement commune des deux mandrins. Enfin, la présence de deux postes d'usinage enlève toute possibilité d'une exploitation en continu de l'outil.

Partant de cet état de fait, la demanderesse a mené des recherches visant à améliorer l'accessibilité d'une machine-outil d'usinage de pièces de révolution ainsi qu'en à assurer l'usinage complet. Ces recherches ont abouti à la conception d'une machine-outil nouvelle simplifiée solutionnant les contraintes précitées tout en garantissant un usinage dans les meilleures conditions. Cette machine-outil a également pour avantage de s'adapter à plusieurs types d'usinages.

La machine-outil pour l'usinage de pièces de révolution de l'invention est donc du type de celle comprenant, agencés sur un bâti dans un même plan horizontal:
- un poste d'usinage équipé d'au moins un outil assurant l'usinage des pièces de révolution,
- et deux stations de travail qui, assurant l'entraînement en rotation de deux pièces de révolution, sont disposées parallèlement en amont et en aval du poste d'usinage, de telle sorte que l'outil de ce dernier, monté mobile le long de l'axe de transfert, puisse évoluer selon un mouvement de va-et-vient d'une station de travail à l'autre et assurer l'usinage d'une pièce de révolution sur une station de travail pendant les opérations auxiliaires nécessaires à une nouvelle pièce de révolution sur l'autre station de travail
caracterisée par le fait que chaque station de travail comprend une seule broche d'entraînement des pièces de révolution avec sa motorisation et équipée à une extrémité d'un mandrin de serrage et de centrage de la pièce de révolution au niveau d'une de ses extrémités. La présence d'une seule unité de mise en mouvement par station de travail a pour avantage de diviser la place occupée par une telle machine-outil par deux en supprimant le volume occupé par l'unité de mise en mouvement qui existait sur la machine-outil décrite dans l'art antérieur. L'accès au poste d'usinage ou aux deux stations de travail en est donc grandement facilité.

En outre, selon un mode préféré de réalisation de la machine-outil, les broches de chaque station de travail sont orientées de façon à présenter du même côté les mors de leur mandrin respectif. Cette disposition particulière a pour avantage de présenter de la même façon les deux mandrins des deux stations de travail, avec leur axe parallèle. Cette nouvelle disposition donne donc à un manipulateur la possibilité de venir changer les pièces à usiner directement sur la machine-outil en insérant une extrémité de celles-ci dans les mors du mandrin de chaque broche.

Contrairement à la machine-outil décrite dans l'arrière-plan technologique, l'utilisation d'une machine-outil conforme à l'invention, ne requiert pas une automatisation totale.

Une telle disposition permet d'envisager des procédés de travail nouveaux. Aussi, l'invention concerne-t-elle plusieurs procédés de travail d'une machine-outil d'usinage respectant les concepts fondamentaux de l'invention.

Selon une caractéristique particulièrement avantageuse de l'invention, un procédé de travail de machine-outil d'usinage de pièces de révolution selon la revendication 1 est remarquable en ce qu'il consiste à réaliser l'usinage d'une première extrémité d'une pièce de révolution sur une station de travail et à réaliser l'usinage de la deuxième extrémité de ladite pièce de révolution sur la deuxième station de travail.

En effet, une machine-outil comprenant deux postes de travail avec une seule broche d'entraînement pour chaque poste de travail a pour avantage de permettre l'usinage complet d'une pièce de révolution tout en assurant les opérations auxiliaires en temps caché puisqu'une seule extrémité est emprisonnée dans les mors du mandrin ce qui permet donc à l'outil du poste d'usinage de réaliser l'usinage de l'extrémité libre. Cette disposition est donc particulièrement avantageuse en ce qu'une seule machine peut proposer un usinage complet des paliers, des manetons et des extrémités contrairement au procédé de travail de la machine-outil décrite dans l'art antérieur qui, destiné à une industrialisation beaucoup plus poussée, nécessitait une chaîne d'usinage comprenant plusieurs machines-outils.

Selon une caractéristique particulièrement avantageuse de l'invention, notamment pour l'usinage de pièces de révolution longues, chaque station de travail comprend une lunette de reprise assurant le guidage de l'extrémité libre de la pièce longue lors de son usinage. L'utilisation de lunettes de reprise comme moyens de guidage auxiliaire, augmente les capacités d'une machine-outil conforme à l'invention, en lui donnant la possibilité de réaliser des usinages de pièces longues telles celles usinées par la machine-outil décrite dans l'art antérieur, tout en garantissant l'accessibilité ainsi que la possibilité d'usiner les extrémités desdites pièces de révolution longues.

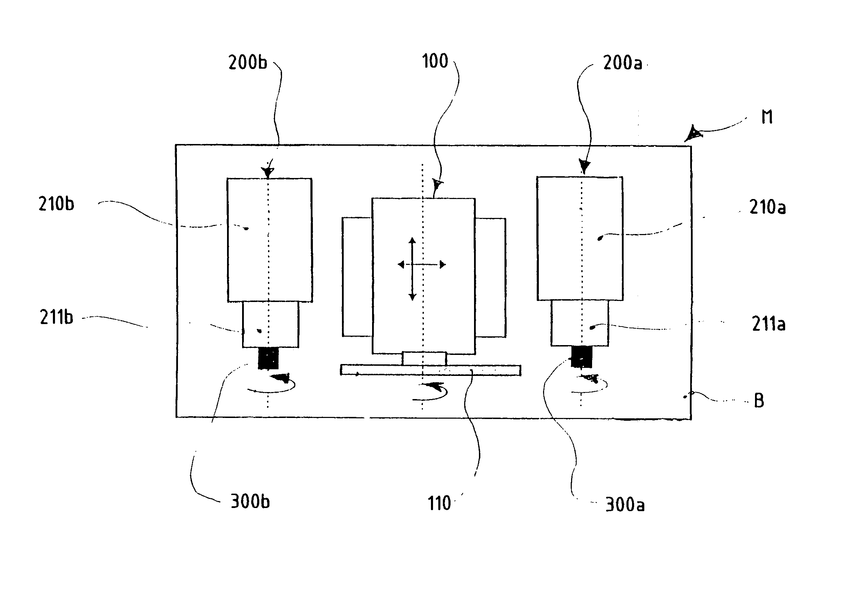

Les concepts fondamentaux de l'invention venant d'être exposés ci-dessus dans leur forme la plus élémentaire, d'autres détails et caractéristiques ressortiront plus clairement à la lecture de la description qui suit donnant à titre d'exemple non limitatif et en regard du dessin annexé, un mode de réalisation d'une machine-outil conforme à l'invention.

La figure portée par ce dessin est une vue schématique d'ensemble de dessus d'une machine-outil conforme à l'invention.

Telle qu'illustrée sur le dessin, la machine-outil de l'invention référencée M dans son ensemble, est du type de celle comprenant, agencés sur un bâti B dans un même plan horizontal:
- un poste d'usinage 100 équipé d'au moins un outil constitué ici par un disque porte-outils 110 assurant l'usinage de pièces de révolution,
- et deux stations de travail 200a et 200b qui, assurant l'entraînement en rotation de deux pièces de révolution 300a et 300b, sont disposés parallèlement en amont et en aval du poste d'usinage 100, de telle sorte que le disque porte-outils 110 de ce dernier monté mobile le long de l'axe de transfert puisse évoluer selon un mouvement de va-et-vient d'une station de travail 200a à l'autre 200b et assurer l'usinage d'une pièce de révolution 300a sur une station de travail 200a pendant les opérations auxiliaires nécessaires à une nouvelle pièce de révolution 300b sur l'autre station de travail 200b. Selon l'invention, chaque station de travail 200a et 200b comprend une seule broche d'entraînement 210a et 210b des pièces de révolution 300a et 300b avec sa motorisation et équipée à une extrémité d'un mandrin de serrage et de centrage 211a et 211b de la pièce de révolution 300a et 300b au niveau d'une de leurs extrémités.

Comme illustrées, les broches 210a et 210b de chaque station de travail 200a et 200b sont orientées de façon à présenter du même côté les mors de leur mandrin respectif 211a et 211b.

Un premier procédé de travail d'une telle machine outil M, mettant en avant un des principaux avantages de ladite machine, consiste à réaliser l'usinage d'une première extrémité d'une pièce 300a de révolution sur une station de travail 200a et à réaliser l'usinage de la deuxième extrémité de ladite pièce de révolution 300a sur la deuxième station de travail 200b. Ce procédé de travail exploite au maximum, la nouvelle possibilité qu'offre cette machine-outil M à savoir l'usinage complet d'une pièce et notamment l'usinage de ses extrémités.

Pour réaliser une telle opération, lorsque notamment les broches 210a et 210b sont orientées dans le même sens, le procédé de travail de machine-outil M conforme à l'invention consiste à retirer une pièce de révolution 300a d'une station de travail 200a et à faire réaliser une rotation à 180° à ladite pièce 300a avant de l'installer dans la deuxième station de travail 200b.

Un autre procédé de travail d'une telle machine-outil M plus particulièrement adapté à l'usinage d'un vilebrequin, consiste à réaliser l'usinage partiel des paliers et manetons sur une station de travail 200a et à réaliser le complément d'usinage sur l'autre station de travail 300b, après retournement préalable à 180° dudit vilebrequin. Ce procédé de travail, notamment pour les opérations d'usinage telles celles de fraisage rapide, de tournage-arasage ou de rectification, a pour avantage de permettre une simplification des moyens d'usinage en réalisant l'usinage des paliers et manetons par un outil n'assurant qu'un usinage partiel de ces derniers sur une première station de travail et de compléter cet usinage sur la deuxième station de travail.

Pour ce faire, selon les modes préférés de réalisation ou selon les applications d'une machine-outil conforme à l'invention, cette dernière est remarquable en ce que ledit outil est du type meule.

Selon un autre mode préféré mais non limitatif de réalisation, ledit outil est du type outil de tournage-arasage.

Selon un autre mode préféré mais non limitatif de réalisation, ledit outil est du type outil de fraisage.

Il est noter que l'adoption d'un type d'outil ne préjuge pas de l'usinage réalisé. Ainsi, par exemple, l'outil du type meule a la possibilité de réaliser sous certaines conditions, d'autres opérations d'usinage que la rectification.

On comprend que la machine-outil d'usinage et les procédés de travail qui viennent d'être ci-dessus décrits et représentés, l'ont été en vue d'une divulgation plutôt que d'une limitation.

## Revendications

1. Machine-outil d'usinage de pièces de révolution (300a et 300b), du type de celle comprenant, agencés sur un bâti (B) dans un même plan horizontal:
- un poste d'usinage (100) équipé d'au moins un outil (110) assurant l'usinage des pièces de révolution (300a et 300b),
- et deux stations de travail (200a et 200b) qui assurant l'entraînement en rotation de deux pièces de révolution (300a et 300b), sont disposées parallèlement en amont et en aval du poste d'usinage (100), de telle sorte que l'outil (110) de ce dernier monté mobile le long de l'axe de transfert d'une pièce de révolution (300a et 300b) d'une station vers l'autre station, puisse évoluer selon un mouvement de va-et-vient d'une station de travail (200a ou 200b) à l'autre (200b ou 200a) et assurer l'usinage d'une pièce de révolution (300a ou 300b) sur une station de travail (200a ou 200b) pendant les opérations auxiliaires nécessaires à une nouvelle pièce de révolution (300b ou 300a) sur l'autre station de travail (200b ou 200a), **CARACTERISEE PAR LE FAIT QUE** chaque station de travail (200a ou 200b) comprend une seule broche d'entraînement (210a ou 210b) des pièces de révolution (300a ou 300b) avec sa motorisation et équipée à une extrémité d'un mandrin de serrage et de centrage (211a ou 211b) de la pièce de révolution (300a ou 300b) au niveau d'une de ses extrémités.

2. Machine-outil selon la revendication 1, **CARACTERISEE PAR LE FAIT QUE** les broches (210a et 210b) de chaque station de travail (200a et 200b) sont orientées de façon à présenter du même côté les mors de leur mandrin respectif (211a ou 211b).

3. Machine-outil d'usinage de pièces de révolution longues (300a ou 300b) selon la revendication 1, **CARACTERISEE PAR LE FAIT QUE** chaque station de travail (200a ou 200b) comprend une lunette de reprise assurant le guidage de l'extrémité libre de la pièce longue (300a ou 300b) lors de son usinage.

4. Machine-outil d'usinage la revendication 1, **CARACTERISEE PAR LE FAIT QUE** ledit outil (110) est du type meule.

5. Machine-outil d'usinage la revendication 1, **CARACTERISEE PAR LE FAIT QUE** ledit outil (110) est du type outil de fraisage.

6. Machine-outil d'usinage selon la revendication 1, **CARACTERISEE PAR LE FAIT QUE** ledit outil (110) est du type outil de tournage-arasage.

7. Procédé de travail d'une machine-outil (M) selon l'une quelconque des revendications 1 à 6, **CARACTERISE EN CE QU'**il consiste à réaliser l'usinage d'une première extrémité d'une pièce de révolution (300a ou 300b) sur une station de travail (200a ou 200b) et à réaliser l'usinage de la deuxième extrémité de ladite pièce de révolution (300a ou 300b) sur la deuxième station de travail (200b ou 200a).

8. Procédé selon la revendication 7, **CARACTERISE EN CE QU'**il consiste à retirer une pièce de révolution (300a ou 300b) d'une station de travail (200a ou 200b) et à faire réaliser une rotation à 180° à ladite pièce (300a ou 300b) avant de l'installer dans la deuxième station de travail (200b ou 200a).

9. Procédé de travail d'une machine-outil d'usinage d'un vilebrequin selon les revendications 7 et 8, **CARACTERISE EN CE QU'**il consiste à réaliser l'usinage partiel des paliers et manetons sur une station de travail (200a ou 200b) et à réaliser le complément d'usinage sur l'autre station de travail (200b ou 200a), après retournement préalable à 180° dudit vilebrequin.

## Claims

1. Machine tool for machining revolution parts (300a and 300b), such as that comprising, arranged on a support (B) in one and the same horizontal plane:
- a machining station (100) fitted with a least one tool (110) for machining the revolution parts (300a and 300b)
- and two work stations (200a and 200b) which, in driving the rotation of two revolution parts (300a and 300b), are arranged in parallel upstream and downstream of the machining station (100), in such a way that the tool (110) thereof, mounted mobile along the axis of transfer of one revolution part (300a and 300b) from one station to the other station, is able to move in an alternating motion from one work station (200a or 200b) to the other (200b or 200a) and to machine a revolution part (300a or 300b) on one work station (200a or 200b) during the auxiliary operations required on a new revolution part (300b or 300a) on the other work station (200b or 200a), **characterised in that** each work station (200a or 200b) includes a single motor-driven pin (210a or 210b) for driving the revolution parts (300a or 300b) and fitted at one end of a mandrel (211a or 211b) for gripping and centring the revolution part (300a or 300b) at one of its ends.

2. Machine tool according to claim 1, **characterised in that** the pins (210a and 210b) of each work station (200a and 200b) are orientated so as to have the jaws of their respective mandrel (211a or 211b) on the same side.

3. Machine tool for machining long revolution parts (300a or 300b) according to claim 1, **characterised in that** each work station (200a or 200b) includes a recovery sight for guiding the free end of the long part (300a or 300b) while it is being machined.

4. Machining machine tool according to claim 1, **characterised in that** said tool (110) is of the abrasive wheel type.

5. Machining machine tool according to claim 1, **characterised in that** said tool (110) is of the milling tool type.

6. Machining machine tool according to claim 1, **characterised in that** said tool (110) is of the turning and planing tool type.

7. Working method for a machine tool (M) according to any one of claims 1 to 6, **characterised in that** it consists in machining a first end of a revolution part (300a or 300b) on one work station (200 or 200b) and machining the second end of said revolution part (300a or 300b) on a second work station (200b or 200a).

8. Method according to claim 7, **characterised in that** it consists in removing a revolution part (300a or 300b) from one work station (200a or 200b) and in rotating said part (300a or 300b) by 180° before installing it in the second work station (200b or 200a).

9. Working method for a machining machine tool of a crankshaft according to claims 7 and 8 **characterised in that** it consists in partially machining the bearings and crankpins on one work station (200a or 200b) and in carrying out any additional machining on the other work station (200b or 200a), after previously turning over said crankshaft by 180°.

## Patentansprüche

1. Werkzeugmaschine zur Bearbeitung von Drehteilen (300a und 300b), die zu dem Maschinentyp gehört, der auf einem Gestell (B) in einer gleichen horizontalen Ebene angeordnet ist und Folgendes umfasst:
- einen Bearbeitungsplatz (100), der mit mindestens einem Werkzeug (110) ausgerüstet ist und die Bearbeitung von Drehteilen (300a und 300b) gewährleistet,
- und zwei Arbeitsplätze (200a und 200b), die die Drehung von zwei Drehteilen (300a und 300b) veranlassen und die parallel oberhalb und unterhalb des Bearbeitungsplatzes (100) angeordnet sind und zwar so, dass das Werkzeug (110) des letzteren, das beweglich entlang der Achse zur Übergabe eines Drehteils (300a und 300b) von einem Arbeitsplatz zum anderen Arbeitsplatz montiert ist, gemäß der hin- und hergehenden Bewegung von einem Arbeitsplatz (200a oder 200b) zum anderen schwenken kann und die Bearbeitung eines Drehteils (300a oder 300b) gewährleisten kann, auf einem Arbeitsplatz (200a oder 200b) während der Hilfsarbeitsgänge, die an einem neuen Drehteil (300b oder 300a) auf dem anderen Arbeitsplatz (200b oder 200a) erforderlich sind, **dadurch gekennzeichnet, dass** jeder Arbeitsplatz (200a oder 200b) eine einzige Spindel (210a oder 210b) für den Transport der Drehteile (300a oder 300b) mit ihrer Motorisierung umfasst und an einem Ende mit einem Spann- und Zentrierfutter (211a oder 211b) des Drehteils (300a oder 300b) im Bereich eines seiner Enden ausgerüstet ist.

2. Werkzeugmaschine gemäß Anspruch 1, **dadurch gekennzeichnet, dass** die Spindeln (210a oder 210b) jedes Arbeitsplatzes (200a und 200b) so ausgerichtet sind, dass sie von derselben Seite die Spannbacken ihres entsprechenden Spannfutters (211a oder 211b) darstellen.

3. Werkzeugmaschine zur Bearbeitung von langen Drehteilen (300a oder 300b) gemäß Anspruch 1, **dadurch gekennzeichnet, dass** jeder Arbeitsplatz (200a oder 200b) eine Aufnahmelünette umfasst, die die Führung des freien Endes des langen Werkstücks (300a oder 300b) während der Bearbeitung gewährleistet.

4. Werkzeugmaschine zur Bearbeitung gemäß Anspruch 1, **dadurch gekennzeichnet, dass** das besagte Werkzeug (110) eine Schleifscheibe ist.

5. Werkzeugmaschine zur Bearbeitung gemäß Anspruch 1, **dadurch gekennzeichnet, dass** das besagte Werkzeug (110) ein Fräswerkzeug ist.

6. Werkzeugmaschine zur Bearbeitung gemäß Anspruch 1, **dadurch gekennzeichnet, dass** das besagte Werkzeug (110) ein Dreh-Nachschneidwerkzeug ist.

7. Arbeitsverfahren einer Werkzeugmaschine (M) gemäß einem der Ansprüche 1 bis 6, **dadurch gekennzeichnet, dass** es in der Durchführung der Bearbeitung eines ersten Endes eines Drehteils (300a oder 300b) auf einem Arbeitsplatz (200a oder 200b) besteht und in der Durchführung der Bearbeitung des zweiten Endes des besagten Drehteils (300a oder 300b) auf dem zweiten Arbeitsplatz (200b oder 200a).

8. Verfahren gemäß Anspruch 7, **dadurch gekennzeichnet, dass** es darin besteht, ein Drehteil (300a oder 300b) von einem Arbeitsplatz (200a oder 200b) zu entfernen und eine Drehung des besagten Stücks (300a oder 300b) um 180° zu bewirken, bevor es auf dem zweiten Arbeitsplatz (200b oder 200a) angeordnet wird.

9. Arbeitsverfahren einer Werkzeugmaschine zur Bearbeitung einer Kurbelwelle gemäß den Ansprüchen 7 und 8, **dadurch gekennzeichnet, dass** es in der Durchführung der teilweisen Bearbeitung von Wellenlagern und Zapfen auf einem Arbeitsplatz (200a oder 200b) besteht und in der Durchführung der Ergänzung der Bearbeitung auf dem anderen Arbeitsplatz (200b oder 200a), nach vorherigem Kippen der besagten Kurbelwelle um 180°.
